# DEMANDE DE BREVET EUROPEEN

(11) **EP 1 072 764 A1**
(43) Date de publication de la demande: **31.01.2001**
(21) Numéro de dépôt: 00402154.9
(22) Date de dépôt: 27.07.2000
(51) Int. Cl.: F01N 3/08, F01N 3/20, F01N 3/027, F02M 25/07, F02D 21/08

(54) **Système et procédé de traitement des gaz d'échappement d'un moteur à combustion**

(30) Priorité: 28.07.1999 FR 9909778
(71) Demandeur: Renault, 92100 Boulogne Billancourt (FR)
(72) Inventeur: Lunati, Sabine, 92000 Nanterre (FR)

(57) **Abrégé**

L'invention concerne un système de traitement (10) des gaz d'échappement d'un moteur à combustion (12), notamment d'un moteur diesel ou d'un moteur à essence à mélange pauvre, du type comportant un piège (23) à oxydes d'azote (NOx) disposé dans une ligne (14) dans laquelle s'écoulent les gaz d'échappement (G) du moteur (12) et comportant en amont du piège (23) à oxydes d'azote (NOx), un système d'injection (22) d'un agent réducteur, caractérisé en ce qu'en amont du système d'injection (22) il comporte des moyens pilotés pour augmenter sélectivement la température des gaz d'échappement (G) et rendre les gaz d'échappement (G) plus réducteurs.

L'invention concerne aussi un procédé qui met en oeuvre le système, caractérisé en ce que, lorsqu'un niveau de remplissage du piège à NOx (23) et qu'un niveau de chargement du filtre à particules (20) sont compris entre des niveaux minimums et maximums prédéterminés, les phases de régénération du piège à NOx (23) et du filtre à particules (20) sont simultanées.

## Description

L'invention concerne un système et un procédé de traitement des gaz d'échappement d'un moteur à combustion.

L'invention concerne plus particulièrement un système de traitement des gaz d'échappement d'un moteur à combustion, notamment d'un moteur diesel ou d'un moteur à essence à mélange pauvre, du type comportant un piège à oxydes d'azote NOx en aval d'un filtre à particules.

Les moteurs diesels est certains moteurs à essence (ou allumage commandé) fonctionnent avec des mélanges carburés pauvres, c'est-à-dire avec un excès d'oxygène.

La combustion des mélanges pauvres produit des oxydes d'azote ou NOx qu'il est nécessaire de traiter par conversion catalytique.

Pour réduire les NOx alors que les gaz d'échappement sont riches en oxygène, une méthode consiste à stocker les NOx contenus dans les gaz d'échappement dans un piège encore appelé NOxtrap et à traiter périodiquement les NOx ainsi piégés en injectant massivement des substances réductrices tel que du carburant. Le document EP-B-0.560.991 décrit un tel dispositif de stockage des NOx ainsi que différentes stratégies de régénération.

Les moteurs à combustion interne et en particulier les moteurs diesels produisent par ailleurs des particules ou suies constituées d'hydrocarbures imbrûlés insolubles.

Pour traiter ses particules une méthode similaire à celle du piège à NOx a été développée, elle consiste à utiliser un filtre à particules qui piège les suies émises par le moteur et à venir périodiquement détruire ces particules en les brûlant.

Cette phase de régénération des filtres est obtenue à partir de moyens de chauffage pilotés, ou bien encore en augmentant temporairement la température des gaz d'échappement au moyen de post-combustion.

L'invention propose ainsi d'utiliser un système de traitement des gaz d'échappement d'un moteur à combustion, notamment d'un moteur diesel ou d'un moteur à essence à mélange pauvre, du type comportant un piège à oxydes d'azote disposé dans une ligne dans laquelle s'écoulent les gaz d'échappement du moteur et comportant en amont du piège à oxydes d'azote, un système d'injection d'un agent réducteur, caractérisé en ce que, en amont du système d'injection, il comporte des moyens pilotés pour augmenter sélectivement la température des gaz d'échappement et rendre les gaz d'échappement plus réducteurs.

Selon d'autres caractéristiques du système :
- les moyens pilotés pour augmenter sélectivement la température et rendre simultanément les gaz d'échappement plus réducteurs comportent un filtre à particules et des moyens de chauffage pour provoquer la combustion des particules filtrées dans les gaz d'échappement ;
- la combustion des particules provoque, outre leur destruction, une augmentation de la température des gaz d'échappement ainsi qu'une diminution de la concentration en oxygène dans ces derniers. Cela rend superflu un système de chauffage supplémentaire des gaz et réduit la quantité de carburant à injecter pour obtenir une atmosphère réductrice. Ces conséquences facilitent la régénération du piège à NOx, tout en minimisant l'apport supplémentaire en énergie (électricité ou carburant) ;
- les moyens de chauffage sont constitués par le filtre à particules utilisé comme résistance électrique de chauffage ;
- les moyens de chauffage sont situés en amont du filtre à particules, de façon à réchauffer les gaz avant leur entrée dans le filtre à particules ;
- le filtre à particules est un filtre catalytique ;
- le filtre à particules est recouvert d'une phase catalytique qui abaisse la température de combustion des particules ;
- le système comporte des moyens de détermination du niveau de chargement du filtre à particules ;
- les moyens de détermination du niveau de chargement du filtre à particules comportent une sonde de pression qui mesure la différence de pression entre l'amont et l'aval du filtre à particules ;
- un catalyseur d'oxydation est interposé entre lesdits moyens pour augmenter la température et rendre simultanément les gaz plus réducteurs, et le piège à oxydes d'azotes ;
- une tubulure relie la ligne à une émission d'air du moteur de manière à introduire des gaz d'échappement dans l'admission d'air.

L'invention propose aussi un procédé de pilotage d'un système de traitement des gaz d'échappement d'un moteur à combustion, du type décrit précédemment, caractérisé en ce que, lorsqu'une valeur du niveau de remplissage du piège à NOx est comprise entre une première valeur minimum et une première valeur maximum prédéterminées et que la valeur du niveau de chargement du filtre à particules est comprise entre une seconde valeur minimum et une seconde valeur maximum prédéterminées, les phases de régénération du piège à NOx et du filtre à particules sont opérées de façon sensiblement simultanées de façon à minimiser la consommation d'agent réducteur.

Selon d'autres caractéristiques du procédé :
- lorsqu'une valeur du niveau de remplissage du piège à NOx atteint une première valeur maximum prédéterminée alors que la valeur du niveau de chargement du filtre à particules est inférieure à une seconde valeur minimum, une quantité suffisante d'agent réducteur est injectée pour régénérer au moins partiellement le piège à NOx ;
- le taux de recirculation des gaz d'échappement est augmenté ponctuellement pour réduire la quantité d'agent réducteur à injecter ;
- lorsque le niveau de chargement du filtre à particules atteint une seconde valeur maximum prédéterminée alors qu'une valeur du niveau de remplissage du piège à NOx est inférieure à une première valeur minimum, la régénération du filtre à particules est réalisée au moins partiellement sans injection simultanée d'agent réducteur en amont du piège à NOx.

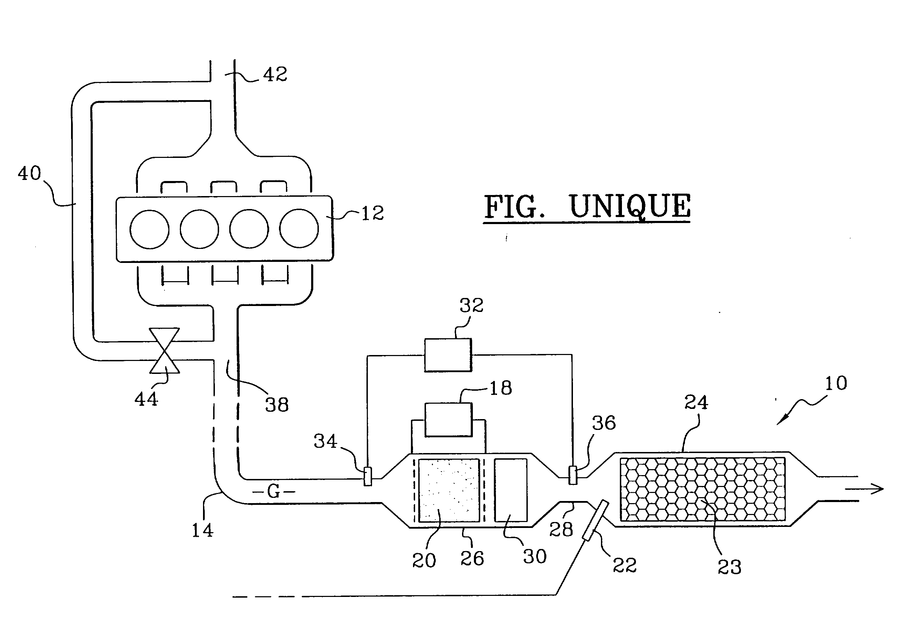

D'autres caractéristiques et avantages de l'invention apparaîtront à la lecture de la description détaillée qui suit pour la compréhension de laquelle on se reportera à la figure unique en annexe.

La figure unique est une représentation schématique d'une ligne d'échappement équipée d'un système de traitement des gaz d'échappement.

On a représenté sur la figure unique, un système de traitement 10 des gaz de d'échappement G d'un moteur à combustion 12. Le moteur 12 est un moteur diesel ou un moteur à essence fonctionnant en mélange pauvre tel qu'un moteur à essence à injection directe.

Une ligne 14 permet l'écoulement des gaz G du moteur vers l'atmosphère. Un système de traitement 10 destiné à purifier les gaz d'échappement G se situe à l'intérieur de la ligne 14. Il se compose principalement de moyens de chauffage 18, d'un filtre à particules 20, d'un système d'injection 22 d'agents réducteurs et d'un piège à NOx 23. Ces éléments sont placés successivement d'amont en aval dans le sens d'écoulement des gaz G.

Avantageusement, le filtre à particules 20 est recouvert d'une imprégnation catalytique.

Le filtre à particules 20 se présente avec une face d'entrée et une face de sortie des gaz G. Il est composé de canaux alternativement bouchés et ouverts en entrée (les canaux sont inversement ouverts et bouchés en sortie). Les parois du filtre à particules 20 sont poreuses.

Le piège 23 à NOx, ainsi que l'ensemble filtre/moyens de chauffage 20 et 18 sont placés chacun dans une chambre 24 et 26 de la ligne 14. Ces chambres 24 et 26 présentent une section transversale supérieure à celle de la ligne 14. Ces deux chambres 24 et 26 sont reliées entre elles par un tronçon 28 ayant une section sensiblement égale à celle de la ligne 14 à l'entrée de la chambre 26. Les chambres 24 et 26 ainsi que le tronçon 28 sont incorporés dans la ligne 14 de façon à limiter les pertes de charges dues aux changements de section.

Avantageusement, un catalyseur d'oxydation 30 est placé dans la chambre 26 en aval du filtre à particules 20. Une sonde de pression 32 est reliée à deux prises de pression 34 et 36 respectivement placés en amont et en aval de la chambre 26.

Il est aussi avantageux d'introduire une dérivation 38 dans la ligne 14 en amont du système de traitement 10. La dérivation 38 permet le branchement d'une conduite 40 qui relie la ligne 14 à l'admission d'air 42 du moteur 12. Une vanne 44 située sur la conduite 40 permet d'ajuster le débit des gaz d'échappement G dans la conduite 40. On réalise ainsi un circuit de recirculation des gaz d'échappement dit RGE.

L'invention consiste à réduire la surconsommation en agent réducteur lors de la régénération du piège à NOx 23 en utilisant la combustion des particules dans le filtre à particules 20.

Le fonctionnement du système de traitement 10 est le suivant.

Les gaz d'échappement G produits par le moteur 12 sont envoyés dans la ligne 14.

Les gaz G traversent alors successivement les chambres 26 et 24 du système de traitement 10.

Lors de leur passage dans la chambre 26 les particules contenues dans les gaz G sont arrêtées par le filtre à particules 20.

Périodiquement les particules ainsi piégées dans le filtre à particules 20 sont brûlées au cours d'une phase de régénération qui est déclenchée selon une stratégie qui sera détaillée plus loin.

Au cours du traitement, le filtre à particules 20 permet le passage des gaz G avec rétention des particules.

La phase de régénération du filtre à particules 20 nécessite une température des gaz d'échappement supérieure ou égale à la température de combustion des particules. Il est avantageux, dans certains cas, d'augmenter la température des gaz d'échappement ou de diminuer la température de combustion des particules pour favoriser la phase de régénération.

Deux types d'assistance peuvent être mises en oeuvre.

Une première assistance dite active est obtenue par le système de chauffage 18.

Elle est mise en oeuvre lorsque la température des gaz d'échappement G en amont du filtre à particules 20 est insuffisante, c'est à dire inférieure à 500°C pour permettre la régénération du filtre à particules 20.

Le système de chauffage 18 peut être, soit le filtre à particules 20 lui-même utilisée comme résistance électrique chauffante, soit un moyen de chauffage additionnel tel qu'une grille chauffante, un brûleur etc. placés en amont du filtre à particules 20. Dans la première configuration, c'est la chaleur dégagée par le filtre à particules 20 qui provoque la combustion des particules déposées dans celui-ci. Dans la seconde configuration ce sont les gaz G chauffés qui produisent la combustion des particules.

Une seconde assistance dite passive est obtenue par régénération catalytique.

Le filtre à particules 20 est recouvert d'une imprégnation particulière appelée phase catalytique qui permet d'abaisser la température de combustion des particules. À titre d'exemple, on peut envisager l'utilisation d'un catalyseur métallique supporté par le filtre. Le métal doit posséder des propriétés oxydantes (ex : Pt, Cu). Il doit être fortement dispersé sur la surface et très dilué c'est à dire que sa teneur en métal et que le diamètre des particules métalliques doivent être très faibles pour éviter le vieillissement de la phase- catalytique par frittage des particules métalliques, sous l'effet de la température. Le support peut être de type oxyde (ex : Al₂O₃) et il doit favoriser le stockage et la mobilité de l'oxygène par épandage sur la surface, de façon à améliorer le contact entre les particules formant une source de carbone et l'agent oxydant (O₂).

Cette réaction est favorisée à plus basse température en présence d'un catalyseur. L'utilisation de l'assistance passive pour la régénération du filtre à 20 permet de diminuer l'apport d'énergie par chauffage, nécessaire pour atteindre la température de combustion des particules.

La fréquence de mise en oeuvre de la phase de régénération du filtre à particules 20 dépend du niveau de chargement du filtre à particules 20 qui est évalué par la sonde de pression 32 et du niveau de remplissage du piège à NOx 23.

Les prises de pression 34 et 36 permettent de déterminer la valeur de la perte de charge entre l'entrée et la sortie du filtre à particules 20 qui correspond au niveau de chargement du filtre 20.

Avantageusement, les prises de pressions 34 et 36 sont placées de façon qu'elles effectuent leurs mesures dans des sections sensiblement égales.

Avantageusement, on trouve en sortie du filtre à particules 20 le catalyseur d'oxydation 30. Son action est double. Il permet d'une part d'oxyder les produits de combustion incomplète des particules et des hydrocarbures imbrûlés par le moteur et, d'autre part, d'oxyder le monoxyde d'azote NO en dioxyde d'azote NO₂.

Après avoir traversé la chambre 26, les gaz G entrent ensuite dans la chambre 24 dans laquelle le piège 23 à NOx est disposé. Pour que le stockage des NOx soit possible, il faut être en milieu oxydant. Le principe de stockage des NOx est le suivant. Le NO préalablement oxydé en NO₂ est stocké dans le piège 23 sous forme de nitrates. La phase de stockage n'est possible qu'en milieu oxydant. Cette condition est respectée notamment dans le cas d'un moteur diesel dans lequel la concentration de gaz d'échappement G en oxygène est comprise entre 5 et 15 %.

Conformément à la présente invention les stratégies de régénération du filtre à particules 20 et du piège 23 à NOx sont synchronisées. En effet, la régénération du filtre à particules 20 qui est disposé en amont du piège 23 à NOx produit du fait de la combustion des suies, une modification importante de la composition des gaz qui sortent du filtre à particules 20 et qui entrent dans le piège 23 à NOx, ainsi qu'une augmentation sensible de la température de ces gaz G. Il en résulte que la phase de régénération du filtre à particules 20 est une période propice pour régénérer le piège 23 à NOx.

Par conséquent la commande de la régénération du piège 23 à NOx et du filtre à particules 20 ne dépend plus exclusivement de leur degré de remplissage respectif et du point de fonctionnement du moteur 12 mais donc également de l'intérêt qu'il y a à opérer une régénération simultanée du filtre à particules 20 et du piège 23 à NOx.

Avantageusement le carburant peut-être tout agent réducteur. L'agent réducteur utilisé est de préférence le carburant utilisé pour le fonctionnement du moteur tel que de l'essence, du fioul, de l'isooctane, etc. ...

Dans la configuration proposée (filtre à particules 20, piège 23), la quantité de carburant à injecter pour passer en phase réductrice est diminuée si la régénération du piège 23 et la régénération du filtre à particules 20 se produisent simultanément ou avec un faible décalage dans le temps. En effet la combustion des particules dans le filtre à particules 20 a deux effets.

D'une part, elle consomme de l'oxygène, ce qui permet un passage ponctuel dans un état dans lequel le mélange est moins oxydant, donc plus favorable à la régénération du piège 23.

D'autre part, la combustion des particules provoque une augmentation de la température des gaz G Elle permet de se rapprocher de la température optimale de régénération du piège 23.

Les deux effets de la combustion des particules lors de la régénération du filtre à particules 20 permettent de réduire l'injection d'agent réducteur pour la régénération du piège à NOx 23.

La phase de régénération de piège 23 peut encore être optimisée en pilotant en conséquence le taux de recirculation des gaz d'échappement. En effet, Les gaz d'échappement G contiennent proportionnellement moins d'oxygène que l'air frais d'admission. Donc, lorsqu'une partie de cet air frais est remplacée par les gaz d'échappement G, la concentration en oxygène du mélange de combustion, et par conséquent la concentration en oxygène des gaz d'échappement G sortant du moteur est diminuée. Cela permet de modifier la composition des gaz et de se placer dans des conditions plus réductrices donc plus favorables à la régénération du piège à NOx 23.

Le piège à NOx 23 se caractérise notamment par une première valeur minimum et une première valeur maximum de remplissage qui correspondent aux valeurs limites de la plage dans laquelle la régénération du piège à NOx 23 doit être effectuée.

Le filtre à particules 20 est notamment défini par une seconde valeur minimum et une seconde valeur maximum de son niveau de chargement. Ces valeurs correspondent respectivement à la valeur du niveau de chargement en dessous de laquelle la quantité de particules stockée dans le filtre 20 est trop faible pour que le filtre puisse être régénéré et à la valeur du niveau de chargement au-dessus de laquelle la perte de charge dans la ligne d'échappement 14 résultant du colmatage du filtre 20 est trop importante pour un bon fonctionnement du moteur.

Les régénérations du filtre à particules 20 et du piège à NOx 23 sont effectuées lorsque la valeur du niveau de remplissage et la valeur du niveau de chargement sont comprises entre leurs valeurs minimum et maximum respectives, cela de façon à minimiser la surconsommation d'agent réducteur pour la régénération du piège à NOx 23. Le piège à NOx 23 et le filtre à particules 20 sont donc dimensionnés pour que leurs phases respectives de régénération soient simultanées et pour que leur synchronisation permette d'injecter un minimum d'agent réducteur.

Cependant, cela n'est pas toujours possible, les vitesses de colmatage du filtre à particules 20 et de remplissage du piège à NOx 23 variant selon le point de fonctionnement du moteur 12.

En effet, la valeur du niveau de remplissage du piège à NOx 23 peut être égale à la première valeur maximum alors que la valeur du niveau de chargement du filtre 20 est inférieure à la seconde valeur minimum. Il est alors possible de régénérer au moins partiellement le piège à NOx 23 en injectant la quantité suffisante d'agent réducteur.

Avantageusement, il est possible d'augmenter ponctuellement le taux de recirculation des gaz d'échappement pour rendre la concentration en oxygène des gaz d'échappement plus favorable à la régénération du piège à NOx 23, ce qui permet de réduire la quantité d'agent réducteur injecter.

Il peut aussi arriver que la valeur du niveau de chargement du filtre à particules 20 atteigne la seconde valeur maximum alors que la valeur du niveau de remplissage du piège à NOx 23 est inférieure à la première valeur minimum. Dans ce cas, la régénération du filtre 20 est effectuée au moins partiellement sans qu'il y ait d'injection simultanée d'agent réducteur en amont du piège à NOx 23.

## Revendications

1. Système de traitement (10) des gaz d'échappement d'un moteur à combustion (12), notamment d'un moteur diesel ou d'un moteur à essence à mélange pauvre, du type comportant un piège (23) à oxydes d'azote (NOx) disposé dans une ligne (14) dans laquelle s'écoulent les gaz d'échappement (G) du moteur (12) et comportant en amont du piège (23) à oxydes d'azote (NOx), un système d'injection (22) d'un agent réducteur, caractérisé en ce qu'en amont du système d'injection (22), il comporte des moyens pilotés pour augmenter sélectivement la température des gaz d'échappement (G) et rendre les gaz d'échappement (G) plus réducteurs.

2. Système selon la revendication 1, caractérisé en ce que lesdits moyens comportent un filtre à particules (20) et des moyens de chauffage (18) pour provoquer la combustion des particules filtrées dans les gaz (G).

3. Système selon la revendication 2, caractérisé en ce que les moyens de chauffage (18) sont constitués par le filtre à particules (20) utilisé comme résistance électrique de chauffage.

4. Système selon la revendication 2, caractérisé en ce que les moyens de chauffage (18) sont situés en amont du filtre à particules (20), de façon à réchauffer les gaz (G) avant leur entrée dans le filtre à particules (20).

5. Système selon l'une quelconque des revendications 2 à 4, caractérisé en ce que le filtre à particules (20) est un filtre catalytique.

6. Système selon la revendication 5, caractérisé en ce que le filtre à particules (20) est recouvert d'une phase catalytique qui abaisse la température de combustion des particules.

7. Système selon l'une quelconque des revendications 2 à 6, caractérisé en ce qu'il comporte des moyens de détermination du niveau de chargement du filtre à particules (20).

8. Système selon la revendication 7, caractérisé en ce que les moyens de détermination du niveau de chargement du filtre à particules (20) comportent une sonde de pression (32) qui mesure la différence de pression entre l'amont et l'aval du filtre à particules (20).

9. Système selon l'une quelconque des revendications précédentes, caractérisé en ce qu'un catalyseur d'oxydation (30) est interposé entre lesdits moyens pour augmenter la température et rendre simultanément les gaz (G) plus réducteurs, et le piège (23) à oxydes d'azotes (NOx).

10. Système selon l'une quelconque des revendications précédentes, caractérisé en ce qu'une tubulure (40) relie la ligne (14) à une émission d'air (42) du moteur (12) de manière à introduire des gaz d'échappement (G) dans l'admission d'air (42).

11. Procédé de pilotage d'un système de traitement (10) des gaz d'échappement (G) d'un moteur à combustion (12), notamment d'un moteur diesel ou d'un moteur à essence à mélange pauvre, selon l'une quelconque des revendications 7 à 10, caractérisé en ce que, lorsqu'une valeur du niveau de remplissage du piège à NOx (23) est comprise entre une première valeur minimum et une première valeur maximum prédéterminées et que la valeur du niveau de chargement du filtre à particules (20) est comprise entre une seconde valeur minimum et une seconde valeur maximum prédéterminées, les phases de régénération du piège à NOx (23) et du filtre à particules (20) sont opérées de façon sensiblement simultanées de façon à minimiser la consommation d'agent réducteur.

12. Procédé de pilotage d'un système de traitement (10) des gaz d'échappement (G) d'un moteur à combustion (12), notamment d'un moteur diesel ou d'un moteur à essence à mélange pauvre, selon l'une quelconque des revendications 7 à 10, caractérisé en ce que, lorsqu'une valeur du niveau de remplissage du piège à NOx (23) atteint une première valeur maximum prédéterminée alors que la valeur du niveau de chargement du filtre à particules (20) est inférieure à une seconde valeur minimum, une quantité suffisante d'agent réducteur est injectée pour régénérer au moins partiellement le piège à NOx (23).

13. Procédé de pilotage selon la revendication 12, caractérisé en ce que le taux de recirculation des gaz d'échappement (G) est augmenté ponctuellement pour réduire la quantité d'agent réducteur à injecter.

14. Procédé de pilotage d'un système de traitement (10) des gaz d'échappement (G) d'un moteur à combustion (12), notamment d'un moteur diesel ou d'un moteur à essence à mélange pauvre, selon l'une quelconque des revendications 7 à 10, caractérisé en ce que, lorsque la valeur du niveau de chargement du filtre à particules (20) atteint une seconde valeur maximum prédéterminée alors qu'une valeur du niveau de remplissage du piège à NOx (23) est inférieure à une première valeur minimum, la régénération du filtre à particules (20) est réalisée au moins partiellement sans injection simultanée d'agent réducteur en amont du piège à NOx (23).
